# NEW EUROPEAN PATENT SPECIFICATION

(11) **EP 2 406 094 B2**
(45) Date of publication and mention of the opposition decision: **14.02.2018**
(45) Mention of the grant of the patent: 31.12.2014
(21) Application number: 10709628.1
(22) Date of filing: 11.03.2010
(51) Int. Cl.: B60J 7/12

(54) **Z-FOLD CONVERTIBLE TOP WITH TWO PIECE SIDE RAIL**
Z-FALTVERDECK MIT ZWEITEILIGEM SEITENHOLM
TOIT CONVERTIBLE EN ACCORDÉON À DEUX RAILS LATÉRAUX

(30) Priority: 12.03.2009 US 159652 P
(43) Date of publication of application: 18.01.2012
(73) Proprietor: Valmet Automotive Oy, 23500 Uusikaupunki (FI)
(72) Inventor: NEUBRAND, Frank, 71263 Weil der Stadt (US)
(74) Representative: Kronthaler, Wolfgang N.K.
(86) International application number: PCT/US2010/026955
(87) International publication number: WO 2010/105037

(56) References cited:
- EP-A1- 0 521 307
- EP-A1- 1 826 048
- EP-B1- 1 326 758
- WO-A1-2005/095137
- WO-A1-2005/095137
- DE-A1- 10 144 583
- DE-C1- 4 441 666
- DE-C1- 19 706 417
- DE-C2- 3 328 294
- US-A1- 2003 052 507
- US-A1- 2004 232 721
- US-A1- 2008 284 200
- US-B2- 6 755 457
- "Volkswagen New Beetle Cabriolet - Weltpremiere des New Beetle
- "Cabrios in den USA, Automotive Intelligence
- Pictures "Vorbenutzung"
- Vehicle registration certificate "New Beetle Fahrzeugschein" US2007/0284909 A1

## Description

### FIELD OF THE INVENTION

The present invention is related to a Z-fold convertible soft top. In particular, the present invention is related to a Z-fold convertible soft top having only two side rails and an independent header element.

### BACKGROUND OF THE INVENTION

Convertible tops for motor vehicles that fold into a Z-fold configuration when in a stored position are known. US 2003/0052507 A1 shows a typical Z-fold roof. Such a position can result in a front header element being stored in an upright position with one or more side rails that connect the header element to a body of a vehicle being stored in an inverted position. The term "upright position" refers to an element that has the same general orientation in the stored position as it has when in the extended position. The term "inverted position" refers to an element that has a generally 180 degrees opposite orientation in the stored position as it has in the extended position. The use of Z-fold convertible tops can result in a relatively compact package of the top when it is in the stored position and thus provides for efficient use of space.

Heretofore Z-fold convertible tops, e.g. as disclosed in US 2003/0052507 A1, have required at least three side rails with a side rail defined as a component of the top that holds a seal that is operable to seal at least part of the top to a side window of the vehicle. Typically, a side rail includes a longitudinally oriented member extending along a length of the vehicle when the top is in the extended position; however, a side rail can also include a portion of a header element that holds a vehicle-length-wise oriented seal. If the side rail is a longitudinally oriented member, the member requires linkage that pivotally couples it to the header element, an adjacent side rail, a balance link, a drive link, and/or the vehicle body, and the like. As such, the greater the number of side rails, the more complex and space inefficient the convertible top. As such, a Z-fold convertible top having only two side rails would provide a more space efficient and less complex convertible top. Such a convertible top would be desirable and have fewer seal joints.

### SUMMARY OF THE INVENTION

A Z-fold convertible soft top having only two side rails with an independent header element is provided. A motor vehicle with the Z-fold convertible top is also provided. The vehicle can have a body with a passenger compartment and a storage compartment located behind the passenger compartment. The Z-fold convertible soft top can have a header element, a side rail and a rear side rail.

The header element is pivotally coupled to the front side rail, the front side rail is pivotally coupled to the rear side rail, and the rear side rail is pivotally coupled to the body of the vehicle. For the purposes of the present invention, the term "pivotally coupled" can include direct pivotal coupling between two components, or in the alternative, indirect pivotal coupling between two components, i.e. two components that pivot relative to each and yet are coupled to each other via at least one intermediate link.

A fabric cover is attached to the header element and the header element, front side rail and rear side rail have an extended position in which the fabric extends at least partially over the passenger compartment of the vehicle. In addition, the header element, front side rail and rear side rail have a storage position in which the header element, front side rail and rear side rail are folded into a Z-fold configuration and can be stored in the storage compartment of the vehicle.

The Z-fold convertible soft top includes a balance link that is pivotally coupled to the vehicle body and a front side rail drive link or a front side rail balance link. In addition, an actuator is pivotally coupled to the vehicle body and the balance link, or in the alternative, the actuator is pivotally coupled to the vehicle body and the rear side rail.

As stated above, a front side rail drive link and front side rail balance link are included. The front side rail drive link is pivotally coupled to the front side rail and the rear side rail, and the front side rail balance link is pivotally coupled to the rear side rail and the front side rail. In addition, the front side rail, rear side rail, front side rail drive link and front side rail balance link can form a four-bar linkage, and the vehicle body, rear side rail, balance link and front side rail drive link can also form a four-bar linkage.

In some instances, a first scissors link extending from the front side rail balance link and affording for the front side rail balance link to be pivotally couple to the front side rail and the front side rail drive link can be included. The first scissors link can have a first member and a second member with the first side rail balance link pivotally coupled to the first member, the second member and/or to a pivot axis about which the first member and the second member are pivotally coupled to each other. In some instances, the first member is pivotally coupled to the first side rail and either the first side rail balance link or the second member, while the second member is pivotally coupled to the first side rail drive link and either the first side rail balance link or the first member. In addition, the first member, second member, front side rail and front side rail drive link can form a four-bar linkage.

The Z-fold convertible top can also include a header element drive link that is pivotally coupled to the header element. The header element drive can also be pivotally coupled to the front side rail drive link and/or front side rail balance link. The front side rail, header element, header element drive link and either the front side rail drive link or the front side rail balance link can form a four-bar linkage.

In some instances, a second scissors link extending from the header element drive link and affording for the header element drive link to be pivotally couple to the header element and the front side rail can be included. The second scissors link can have a first member and a second member with the header element drive link pivotally coupled to the first member, the second member and/or to a pivot axis about which the first member and the second member are pivotally coupled to each other. In some instances, the first member is pivotally coupled to the header element and either the header element drive link or the second member, while the second member is pivotally coupled to the first side rail and either the header element drive link or the first member. In addition, the first member, second member, header element and front side rail can form a four-bar linkage.

### BRIEF DESCRIPTION OF THE DRAWINGS

Figures 1A-1E are outer side view illustrations of a Z-fold convertible soft top according to an embodiment of the present invention in an extended position (1A-1B), partially extended or retracted positions (1C-1D) and a retracted position (1E);
Figure 2 is an enlarged outer side view of the embodiment shown in Figures 1A-1E;
Figure 3 is an inner perspective view of the embodiment shown in Figure 1C;
Figure 4 is an inner side view of the embodiment shown in Figure 1B;
Figure 5 is a side view of another embodiment of the present invention; and
Figure 6 is an enlarged side view of the embodiment shown in Figure 5.

### DETAILED DESCRIPTION OF THE INVENTION

The present invention discloses a Z-fold convertible soft top having only two side rails with an independent header element. The invention also discloses a motor vehicle with the Z-fold convertible top. As such, the invention has utility as a component for a motor vehicle.

For the purposes of the present invention, the term side rail is defined as an element or member of the convertible top that holds a seal that is operable to seal at least part of the convertible top to a side window of the vehicle. A motor vehicle with the Z-fold convertible top is also provided. The vehicle has a body with a passenger compartment and a storage compartment located behind the passenger compartment.

The Z-fold convertible soft top has a header element, a pair of front side rails and a pair of rear side rails. The soft top is symmetrical about a longitudinal axis of the vehicle, and as such, only a single front side rail and a single rear side will be discussed hereafter -- with the knowledge that a generally symmetric front side rail and rear side rail are included.

The header element is pivotally coupled to the front side rail, the front side rail is pivotally coupled to the rear side rail, and the rear side rail is pivotally coupled to the body of the vehicle. It is appreciated that the term pivotally coupled includes indirect pivotally coupled and direct pivotally coupled. For example and for illustrative purposes only, the rear side rail can be directly pivotally coupled to the vehicle body about a common pivot axis, or in the alternative, be indirectly pivotally coupled to the vehicle body through an elongated member that is directly coupled to the vehicle body about a first pivot axis and directly coupled to the rear side rail about a second pivot axis.

A fabric cover is attached to the header element and the header element, front side rail and rear side rail have an extended position in which the fabric extends at least partially over the passenger compartment of the vehicle. In addition, the header element, front side rail and rear side rail can have a storage position in which the header element, front side rail and rear side rail are folded into a Z-fold configuration and can be stored in the storage compartment of the vehicle.

The Z-fold convertible soft top includes a balance link that is pivotally coupled to the vehicle body and a front side rail drive link or a front side rail balance link. In addition, an actuator is pivotally coupled to the vehicle body and the balance link, or in the alternative, the actuator is pivotally coupled to the vehicle body and the rear side rail, or any other component of the soft top, such that movement of the top from an extended position where the top at least partially covers the passenger compartment to a retracted position where the top is located at least partially within the storage compartment is afforded by the actuator.

As stated above, a front side rail drive link and front side rail balance link are included. The front side rail drive link is pivotally coupled to the front side rail and the rear side rail, and the front side rail balance link is pivotally coupled to the rear side rail and the front side rail. In addition, the front side rail, rear side rail, front side rail drive link and front side rail balance link can form a four-bar linkage, and the vehicle body, rear side rail, balance link and front side rail drive link can also form a four-bar linkage.

In some instances, a first scissors link extending from the front side rail balance link and affording for the front side rail balance link to be pivotally couple to the front side rail and the front side rail drive link can be included. The first scissors link can have a first member and a second member with the first side rail balance link pivotally coupled to the first member, the second member and/or to a pivot axis about which the first member and the second member are pivotally coupled to each other. In some instances, the first member is pivotally coupled to the first side rail and either the first side rail balance link or the second member, while the second member is pivotally coupled to the first side rail drive link and either the first side rail balance link or the first member. In addition, the first member, second member, front side rail and front side rail drive link can form a four-bar linkage.

The Z-fold convertible top can also include a header element drive link that is pivotally coupled to the header element. The header element drive can also be pivotally coupled to the front side rail drive link and/or front side rail balance link. The front side rail, header element, header element drive link and either the front side rail drive link or the front side rail balance link can form a four-bar linkage.

In some instances, a second scissors link extending from the header element drive link and affording for the header element drive link to be pivotally couple to the header element and the front side rail can be included. The second scissors link can have a first member and a second member with the header element drive link pivotally coupled to the first member, the second member and/or to a pivot axis about which the first member and the second member are pivotally coupled to each other. In some instances, the first member is pivotally coupled to the header element and either the header element drive link or the second member, while the second member is pivotally coupled to the first side rail and either the header element drive link or the first member. In addition, the first member, second member, header element and front side rail can form a four-bar linkage.

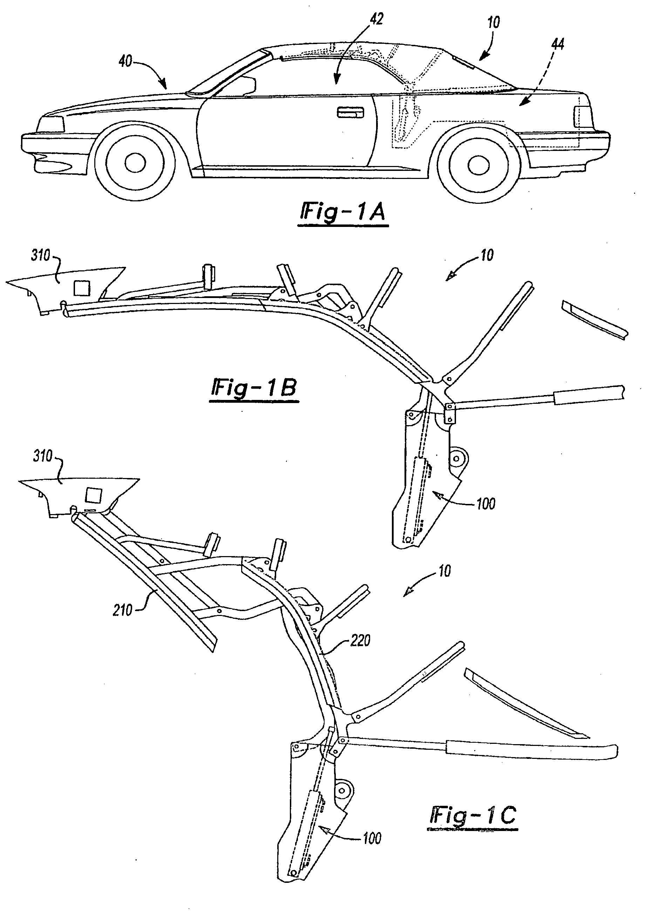

Turning now to Figures 1A-1E, an embodiment of a Z-fold convertible soft top is shown generally at reference numeral 10. It is appreciated that only a portion of the top 10 is shown in the figures and that a generally symmetrical half is not shown. The teaching and disclosure of the top 10 can be fully realized by the figures and their accompanied explanation.

The top 10 can include a front side rail 210 and a rear side rail 220. In addition, a header element 310 can be pivotally coupled to the front side rail 210. As shown in Figures 1A-1E, the Z-fold convertible soft top 10 is operable to move between an extended position as shown in Figures 1A-1B to a stored position as shown in Figure IE, and vice versa. It is appreciated that when the top 10 is in the extended position it can extend over and cover a passenger compartment 42 of a vehicle 40 and when the top 10 is in the stored position it can be stored in a storage compartment 44 of the vehicle 40. It is further appreciated that the header element 310 can have an upright orientation in the stored position while the front side rail 210 and the rear side rail 220 have an inverted orientation in the stored position.

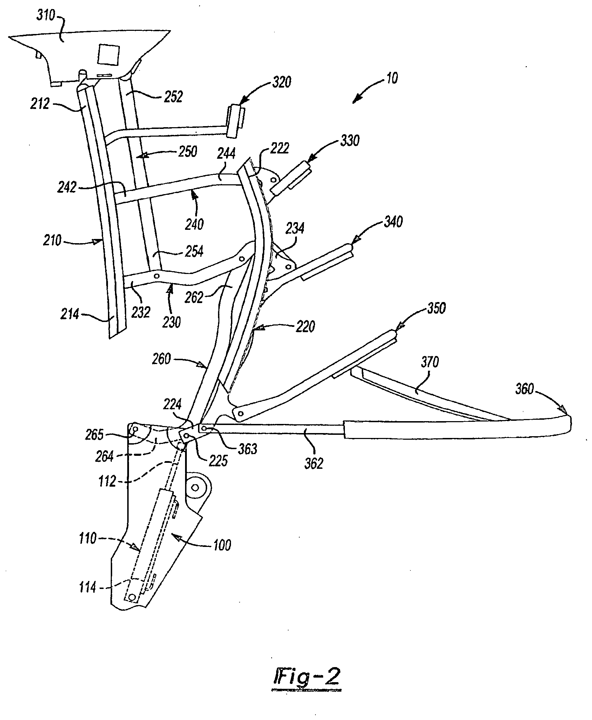

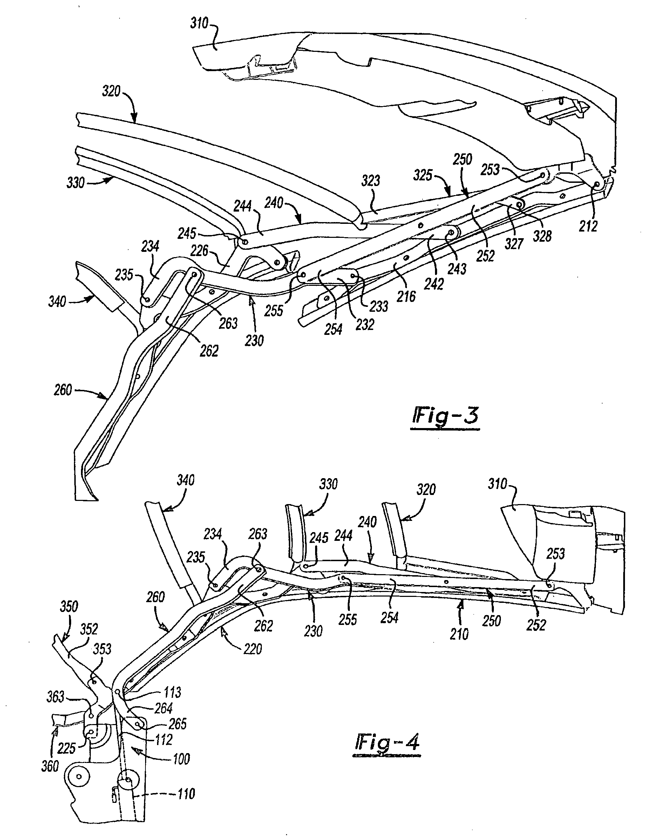

Turning now to Figures 2-4, an enlarged view of the convertible soft top 10 is shown. The vehicle 40 can have a body 100 that supports the convertible top 10 and the rear side rail 220 can have a first end 222 and a second end 224 with the second end 224 pivotally coupled to the vehicle body 100 about a pivot axis 225. In addition, a balance link 260 can be included and have a first end 262 and a second end 264, with the second end 264 pivotally coupled to the body 100 about a pivot axis 265.

Pivotally coupled to the balance link 260 can be an actuator 110, the actuator 110 having a first end 112 pivotally coupled to the balance link 260 about a pivot axis 113 and a second end 114 pivotally coupled to the vehicle body 100 about a pivot axis 115. In this manner, an actuator can be used to move or drive the balance link 260.

A front side rail drive link 230 can have a first end 232 and a second end 234, the first end 232 being pivotally coupled to the front side rail 210 about a pivot axis 233. Likewise, the second end 234 can be pivotally coupled to the rear side rail 220 about a pivot axis 235. In some instances, the front side rail 210 and/or the rear side rail 220 can have one or more brackets 216 and/or 226, respectively, to which linkage can be attached thereto. In the alternative, the linkage can be attached directly to the front side rail 210 and/or the rear side rail 220. It is appreciated that the brackets 216 and/or 226 can be rigidly and/or fixedly attached to the side rails.

As part of the pivotal coupling of the front side rail 210 to the rear side rail 220, a front side rail balance link 240 can be included. The front side rail balance link 240 can have a first end 242 and a second end 244, the first end 242 being pivotally coupled to the front side rail 210 about a pivot axis 243. In addition, the second end 244 can be pivotally coupled to the rear side rail 220 about a pivot axis 245. As shown particularly in Figure 2, the front side rail drive link 230, the front side rail balance link 240, the front side rail 210 and the rear side rail 220 can form a four-bar linkage that affords for controlled movement of the front side rail 210 with respect to the rear side rail 220. In addition and as illustrated in Figures 2-4, the balance link 260, the front side rail drive link 230, the rear side rail 220 and the vehicle body 100 can provide a four-bar linkage that affords for controlled movement of the rear side rail 220 with respect to the vehicle body 100.

Looking particularly at the header element 310, a header element drive link 250 can be included and have a first end 252 and a second end 254. The first end 252 can be pivotally coupled to the header element 310 about a pivot axis 253 and the second end 254 can be pivotally coupled to the front side rail drive link 230 about a pivot axis 255. The header element 310 can also be pivotally coupled to the front side rail 210 about a pivot axis 212. In this manner, the front side rail 210, the header element 310, the header element drive link 250 and the front side rail drive link 230 can form a four-bar linkage that affords for controlled movement of the header element 310 with respect to the front side rail 210. It is appreciated that with the four-bar linkages, the actuator 110 can move or drive the top 10 in a controlled manner. In addition, the actuator 110 can be any type of actuator known to those skilled in the art, illustratively including a hydraulic actuator as shown in the figures, an electric motor actuator, a magnetic actuator, a gear driven actuator and the like.

In addition to the header element 310, the front side rail 210 and the rear side rail 220, the convertible soft top 10 naturally has one or more bows. For example and for illustrative purposes only, the convertible soft top 10 can have a first bow 320 that is attached to the front side rail 210. In addition, the rear side rail 220 can have a second bow 330, a third bow 340 and/or a corner bow 350 attached thereto. In some instances, the corner bow 350 can have an end 352 that is pivotally attached to the rear side rail 220 about a pivot axis 353. In addition, a tension bow 360 can be pivotally attached to the rear side rail 220 about a pivot axis 363. Located between the corner bow 350 and the tension bow 360 can be a backlight 370. Although not shown in the figures, it is appreciated that a fabric cover can extend from the header element 310 over the one or more bows to the tension bow 360 in order to provide a convertible soft top for a motor vehicle. It is further appreciated that with the pivotal coupling of the header element 310 to the front side rail 210, a Z-fold convertible top with only two side rails and an independent header element is provided. As such, a less complex and relatively space efficient convertible soft top is provided for a motor vehicle.

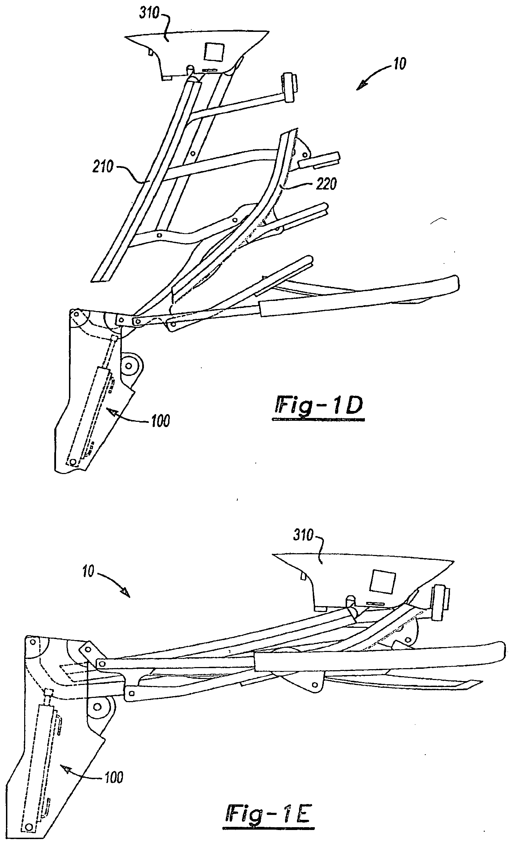

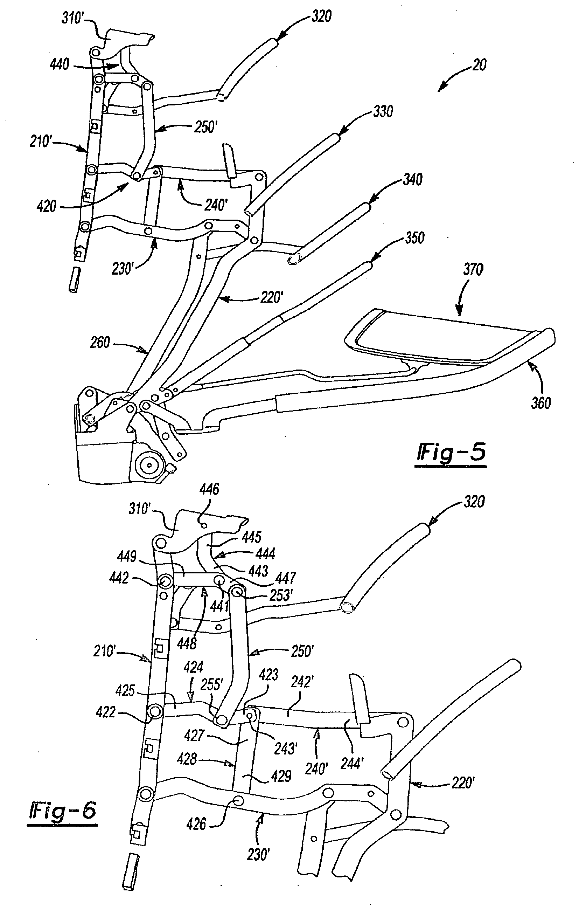

Another embodiment 20 of the present invention is shown in Figures 5 and 6. The embodiment 20 can include a first scissors link 420 and/or a second scissors link 440. It is appreciated that the first scissors link 420 and/or the second scissors link 440 can improve the quality of motion for the Z-fold convertible soft top. In particular, the first scissors link 420 and/or the second scissors link 440 can increase a moment arm during raising and/or lowering of the Z-fold convertible top 20 and reduce acceleration of the convertible top 20 at both ends of movement provided by the actuator 110. As shown in Figure 5, the Z-fold convertible soft top 20 can include a front side rail 210', a rear side rail 220', a front side rail drive link 230', a front side rail balance link 240', a header element drive link 250' and a header element 310'. It is appreciated that the components indicated by the prime reference numerals may or may not have the same dimensions, be made from the same material and the like as the components illustrated by the non-prime reference numbers in Figures 1-4.

Turning to Figure 6, an enlarged view of the first scissors link 420 and second scissors link 440 is shown. The first scissors link 420 can have a first member 424 and a second member 428. The first member 424 can have a first end 423 that is pivotally coupled to the front side rail balance link 240' about a pivot axis 243'. The first member 424 can also have a second end 425 that is pivotally coupled to the front side rail 210' about a pivot axis 422. Likewise, the second member 428 can have a first end 427 that is pivotally coupled to the front side rail balance link 240' about the pivot axis 243'. A second end 424 of the second member 428 can be pivotally coupled to the front side rail drive link 230' about a pivot axis 426. In some instances, the first member 424, second member 428, the front side rail drive link 230' and the front side rail 210' can form a four-bar linkage as illustrated in Figure 6.

The second scissors link 440 can have a first member 444 and a second member 448. The first member 444 can have a first end 443 that is pivotally coupled to the header element drive link 250' about a pivot axis 253'. The first member 444 can also have a second end 445 that is pivotally coupled to the header element 310' about a pivot axis 446. Similarly, the second member 448 can have a first end 447 pivotally coupled to the header element drive link 250' about the pivot axis 253' and a second end 449 pivotally coupled to 210' about a pivot axis 442. In addition, the first member 444, second member 448, the front side rail 210' and the header element 310' can form a four-bar linkage.

In the alternative to the above, the first end 443 of the first member 444 can be pivotally coupled to the second member 448 about a pivot axis 441. In such an instance, the first member 444 and the second member 448 do not have a common pivot axis with respect to the header element drive link 250'. It is appreciated that the same could be true for the first scissors link 420 and the first member 424, second member 428 and front side rail balance link 240'.

In this manner, the first scissors link 420 and/or the second link scissors link 440 can provide pivotal coupling between the front side rail balance link 240' and the front side rail 210' and/or the header element drive link 250' and the header element 310'.

The foregoing drawings, discussion and description are illustrative of specific embodiments of the present invention, but they are not meant to be limitations upon the practice thereof. Numerous modifications and variations of the invention will be readily apparent to those of skill in the art in view of the teaching presented herein. As such, the specification and the claims that follow should be interpreted broadly.

## Claims

1. A Z-fold convertible soft top (10, 20) having side rails (210, 210', 220, 220') with an independent header element (310, 310') for a vehicle (40), the vehicle (40) having a body (100) with a passenger compartment (42) and a storage compartment (44) located behind the passenger compartment (42), said convertible soft top (10, 20) comprising:
a header element (310, 310'), a pair of front side rails (210, 210') and a pair of rear side rails (220, 220');
said header element (310, 310') pivotally coupled to said front side rail (210, 210'), said front side rails (210, 210') each pivotally coupled to a rear side rail (220, 220') and said rear side rails (220, 220') pivotally coupled to the body (100) of the vehicle (40);
a fabric cover attached to said header element (310, 310');
said header element (310, 310'), said front side rails (210, 210') and said rear side rails (220, 220') having an extended position whereby said fabric extends at least partially over the passenger compartment (42) and a storage position whereby said header element (310, 310'), front side rails (210, 210') and rear side rails (220, 220') fold into a Z-fold configuration;
**characterized in that** the Z-fold convertible soft top (10, 20) has symmetrical about a longitudinal axis of the vehicle pairs of side rails with each pair having only two side rails (210, 210', 220, 220'), and is further comprising a balance link (260) and an actuator (110), said actuator (110) pivotally coupled to the vehicle body (100) and said balance link (260), further comprising a front side rail drive link (230, 230') pivotally coupled to said front side rail (210, 210') and said rear side rail (220, 220'), and further comprising a front side rail balance link (240, 240') pivotally coupled to said rear side rail (220, 220') and said front side rail (210, 210').

2. The Z-fold convertible top of claim 1, wherein the balance link (260) is pivotally coupled to said body (100) and at least one of said front side rail drive link (230, 230') and said front side rail balance link (240, 240').

3. The Z-fold convertible top of claim 1 or 2, wherein said front side rail (210, 210'), said rear side rail (220, 220'), said front side rail drive link (230, 230') and said front side rail balance link (240, 240') form a four-bar linkage.

4. The Z-fold convertible top of claim 3, further comprising a first scissors link (420), wherein said front side rail balance link (240') is pivotally coupled to said front side rail (210') and said front side rail drive link (230').

5. The Z-fold convertible top of claim 1, further comprising a header element drive link (250, 250') pivotally coupled to said header element (310, 310') and at least one of said front side rail drive link (230, 230') and said front side rail balance link (240, 240').

6. The Z-fold convertible top of claim 5, wherein said front side rail (210, 210'), said header element (310, 310'), said header element drive link (250, 250') and at least one of said front side rail drive link (230, 230') and said front side rail balance link (240, 240') form a four-bar linkage.

7. The Z-fold convertible top of claim 5, further comprising a second scissors link (440), wherein said header element drive link (250') is pivotally coupled to said header element (310') and said front side rail (210').

8. The Z-fold convertible top of claim 4, further comprising the first scissors link (420) and a second scissors link (440), wherein said front side rail balance link (240') is pivotally coupled to said front side rail (210') and said front side rail drive link (230') via said first scissors link (420), and said header element drive link (250') is pivotally coupled to said header element (310') and said front side rail (210') via said second scissors link (440), and wherein said first scissors link (420) has a first member (424) and a second member (428), said first member (424) pivotally coupled to said front side rail (210') and at least one of said front side rail balance link (240') and said second member (428), and said second member (428) pivotally coupled to said front side rail drive link (230') and at least one of said front side rail balance link (240') and said first member (424).

9. The Z-fold convertible top of claim 7, wherein said second scissors link (440) has a first member (444) and a second member (448), said first member (444) pivotally coupled to said header element (310') and at least one of said header element drive link (250') and said second member (448), and said second member (448) pivotally coupled to said front side rail (210') and at least one of said header element drive link (250') and said first member (444).

10. The Z-fold convertible soft top of claim 1, further comprising:
said header element (310') pivotally coupled to said front side rail (210') via a first scissors link (420), said front side rail (210') pivotally coupled to said rear side rail (220') via a second scissors link (440) and said rear side rail (220') pivotally coupled to the body of the vehicle (100); and
said first scissors link (420) and said second scissors link (440) providing improved quality of motion for the Z-fold convertible soft top (20) by at least one of increasing a moment arm during raising and lowering of the Z-fold convertible top (20) and reducing acceleration at both ends of movement of the Z-fold convertible top (20).

11. A Z-fold convertible soft top (10, 20) for a motor vehicle, according to claim 1, having side rails (210, 210', 220, 220') with an independent header element (310, 310') comprising:
a front side rail (210, 210') with a side seal operable to seal at least a portion of said front side rail (210, 210') to at least a portion of a side window of the motor vehicle (40);
a rear side rail (220, 220') with a side seal operable to seal at least a portion of said rear side rail (220, 220') to at least a portion of a side window of the motor vehicle (40);
a non-side seal header element (310, 310') pivotally coupled to said front side rail (210, 210'), said non-side seal header element (310, 310') having a stored upright position;
**characterized in that** the Z-fold convertible soft top (10, 20) has only two side rails (210, 210', 220, 220').

## Patentansprüche

1. Z-Faltverdeck (10, 20) mit Seitenholmen (210, 210', 220, 220') mit einem eigenständigen Dachspitzenelement (310, 310') für ein Fahrzeug (40), wobei das Fahrzeug (40) eine Karosserie (100) mit einem Fahrgastraum (42) und einem hinter dem Fahrgastraum (42) angeordneten Ablagefach (44) aufweist und das Faltverdeck (10, 20) folgendes umfasst:
ein Dachspitzenelement (310, 310'), ein Paar vorderer Seitenholme (210, 210') und ein Paar hinterer Seitenholme (220, 220');
wobei das Dachspitzenelement (310, 310') verschwenkbar mit dem vorderen Seitenholm (210, 210') gekoppelt ist, die vorderen Seitenholme (210, 210') jeweils verschwenkbar mit einem hinteren Seitenholm (220, 220') gekoppelt sind und die hinteren Seitenholme (220, 220') verschwenkbar mit der Karosserie (100) des Fahrzeugs (40) gekoppelt sind;
einen am Dachspitzenelement (310, 310') angebrachten Stoffbezug;
wobei das Dachspizenelement (310, 310'), die vorderen Seitenholme (210, 210') und die hinteren Seitenholme (220, 220') eine Ausfahrstellung, in welcher der Bezug den Fahrgastraum (42) zumindest teilweise überspannt, und eine Ablagestellung, in der das Dachspitzenelement (310, 310'), die vorderen Seitenholme (210, 210') und die hinteren Seitenholme (220, 220') Z-förmig zusammengefaltet sind, aufweisen;
**dadurch gekennzeichnet, dass** das Z-Faltverdeck (10, 20) symmetrisch um eine Längsachse des Fahrzeugs Paare von Seitenholmen aufweist, wobei jedes Paar nur zwei Seitenholme (210, 210', 220, 220') aufweist, und ferner einen Ausgleichslenker (260) und ein Stellglied (110) umfasst, wobei das Stellglied (110) verschwenkbar mit der Karosserie (100) und dem Ausgleichslenker (260) gekoppelt ist, ferner einen verschwenkbar mit dem vorderen Seitenholm (210, 210') und dem hinteren Seitenholm (220, 220') gekoppelten Antriebslenker (230, 230') für den vorderen Seitenholm umfasst, und ferner einen verschwenkbar mit dem hinteren Seitenholm (220, 220') und dem vorderen Seitenholm (210, 210') gekoppelten Ausgleichslenker (240, 240') für den vorderen Seitenholm umfasst.

2. Z-Faltverdeck nach Anspruch 1, wobei der Ausgleichslenker (260) verschwenkbar mit der Karosserie (100) und zumindest mit dem Antriebslenker (230, 230') für den vorderen Seitenholm und/oder dem Ausgleichslenker (240, 240') für den vorderen Seitenholm gekoppelt ist.

3. Z-Faltverdeck nach Anspruch 1 oder 2, wobei der vordere Seitenholm (210, 210'), der hintere Seitenholm (220, 220'), der Antriebslenker (230, 230') für den vorderen Seitenholm und der Ausgleichslenker (240, 240') für den vorderen Seitenholm zusammen ein Viergelenk bilden.

4. Z-Faltverdeck nach Anspruch 3, ferner umfassend einen ersten Scherenlenker (420), wobei der Ausgleichslenker (240) für den vorderen Seitenholm verschwenkbar mit dem vorderen Seitenholm (210') und dem Antriebslenker (230) für den vorderen Seitenholm gekoppelt ist.

5. Z-Faltverdeck nach Anspruch 1, ferner umfassend einen Dachspitzenelement-Antriebslenker (250, 250'), der verschwenkbar mit dem Dachspitzenelement (310, 310') und zumindest dem Antriebslenker (230, 230') für den vorderen Seitenholm und/oder dem Ausgleichslenker (240, 240') für den vorderen Seitenholm gekoppelt ist.

6. Z-Faltverdeck nach Anspruch 5, wobei der vordere Seitenholm (210, 210'), das Dachspitzenelement (310, 310'), der Dachspitzenelement-Antriebslenker (250, 250') und zumindest der Antriebslenker (230, 230') für den vorderen Seitenholm und/oder der Ausgleichslenker (240, 240') für den vorderen Seitenholm zusammen ein Viergelenk bilden.

7. Z-Faltverdeck nach Anspruch 5, ferner umfassend einen zweiten Scherenlenker (440), wobei der Dachspitzenelement-Antriebslenker (250') verschwenkbar mit dem Dachspitzenelement (310') und dem vorderen Seitenholm (210') gekoppelt ist.

8. Z-Faltverdeck nach Anspruch 4, ferner umfassend den ersten Scherenlenker (420) und einen zweiten Scherenlenker (440), wobei der Ausgleichslenker (240') für den vorderen Seitenholm über den ersten Scherenlenker (420) verschwenkbar mit dem vorderen Seitenholm (210') und dem Antriebslenker (230') für den vorderen Seitenholm gekoppelt ist, und der Dachspitzenelement-Antriebslenker (250') über den zweiten Scherenlenker (440) verschwenkbar mit dem Dachspitzenelement (310') und dem vorderen Seitenholm (210') gekoppelt ist, und wobei der erste Scherenlenker (420) ein erstes Glied (424) und ein zweites Glied (428) aufweist, wobei das erste Glied (424) verschwenkbar mit dem vorderen Seitenholm (210') und zumindest dem Ausgleichslenker (240') für den vorderen Seitenholm und/oder dem zweiten Glied (428) gekoppelt ist, und das zweite Glied (428) verschwenkbar mit dem Antriebslenker (230') für den vorderen Seitenholm und zumindest dem Ausgleichslenker (240') für den vorderen Seitenholm und/oder dem ersten Glied (424) gekoppelt ist.

9. Z-Faltverdeck nach Anspruch 7, wobei der zweite Scherenlenker (440) ein erstes Glied (444) und ein zweites Glied (448) aufweist, wobei das erste Glied (444) verschwenkbar mit dem Dachspitzenelement (310') und zumindest dem Dachspitzenelement-Antriebslenker (250') und/oder dem zweiten Glied (448) gekoppelt ist, und das zweite Glied (448) verschwenkbar mit dem vorderen Seitenholm (210') und zumindest dem Dachspitzenelement-Antriebslenker (250') und/oder dem ersten Glied (444) gekoppelt ist.

10. Z-Faltverdeck nach Anspruch 1, ferner umfassend:
das Dachspitzenelement (310'), das über einen ersten Scherenlenker (420) verschwenkbar mit dem vorderen Seitenholm (210') gekoppelt ist, wobei der vordere Seitenholm (210') über einen zweiten Scherenlenker (440) verschwenkbar mit dem hinteren Seitenholm (220') gekoppelt ist und der hintere Seitenholm (220') verschwenkbar mit der Fahrzeugkarosserie (100) gekoppelt ist; und
wobei der erste Scherenlenker (420) und der zweite Scherenlenker (440) eine qualitativ bessere Bewegung des Z-Faltverdecks (20) ergeben, indem zumindest ein Hebelarm beim Anheben und
Absenken des Z-Faltverdecks (20) verstärkt und/oder die Beschleunigung an beiden Enden der Bewegung des Z-Faltverdecks (20) verringert wird.

11. Z-Faltverdeck (10, 20) für ein Kraftfahrzeug, nach Anspruch 1, das Seitenholme (210, 210', 220, 220') mit einem eigenständigen Dachspitzenelement (310, 310') aufweist, umfassend:
einen vorderen Seitenholm (210, 210') mit einer Seitendichtung, die dazu eingerichtet ist, zumindest einen Teil des vorderen Seitenholms (210, 210') gegenüber zumindest einem Teil eines Seitenfensters des Kraftfahrzeugs (40) abzudichten;
einen hinteren Seitenholm (220, 220') mit einer Seitendichtung, die dazu eingerichtet ist, zumindest einen Teil des hinteren Seitenholms (220, 220') gegenüber zumindest einem Teil eines Seitenfensters des Kraftfahrzeugs (40) abzudichten;
ein Dachspitzenelement ohne Seitendichtung (310, 310'), das verschwenkbar mit dem vorderen Seitenholm (210, 210') gekoppelt ist, wobei das Dachspitzenelement ohne Seitendichtung (310, 310') eine aufrechte Ablagestellung aufweist; **dadurch gekennzeichnet, dass** das Z-Faltverdeck (10, 20) nur zwei Seitenholme (210, 210', 220, 220') aufweist.

## Revendications

1. Capote en Z-configuration (10, 20) présentant des rails latéraux (210, 210', 220, 220') avec un élément de sommet de toit indépendant (310, 310') pour un véhicule (40), ledit véhicule (40) présentant une carrosserie (100) avec un habitacle (42) et un compartiment de rangement (44) situé derrière l'habitacle (42), ladite capote (10, 20) comportant:
un élément de sommet de toit (310, 310'), une paire des rails latéraux avant (210, 210') et une paire des rails latéraux arrière (220, 220');
ledit élément de sommet de toit (310, 310') étant relié à pivotement audit rail latéral avant (210, 210'), chaque rail latéral avant (210, 210') étant relié à pivotement audit à un rail latéral arrière (220, 220') et ledit rails latéraux arrière (220, 220') étant relié à pivotement à la carrosserie (100) du véhicule (40);
une enveloppe attachée audit élément de sommet de toit (310, 310');
ledit élément de sommet de toit (310, 310'), ledit rails latéraux avant (210, 210') et ledit rails latéraux arrière (220, 220') présentant une position de sortie, dans laquelle l'enveloppe recouvre au moins partiellement ledit habitacle (42), et une position de rangement, dans laquelle ledit élément de sommet de toit (310, 310'), ledit rails latéraux avant (210, 210') et ledit rails latéraux arrière (220, 220') sont pliés en Z-configuration;
**caractérisé en ce que** la capote en Z-configuration (10, 20) présentant symétrique autour d'un axe longitudinal du véhicle des paires des rails latéraux et chaque paire ne présent que deux rails latéraux (210, 210', 220, 220'), et comportant en outre un bras d'équilibrage (260) et un actionneur (110), ledit actionneur (110) étant relié à pivotement à la carrosserie (100) et audit bras d'équilibrage (260), comportant en outre un bras d'entraînement (230, 230') du rail latéral avant, ledit bras étant relié à pivotement au rail latéral avant (210, 210') et au rail latéral arrière (220, 220'), et comportant en outre un bras d'équilibrage (240, 240') du rail latéral avant, ledit bras étant relié à pivotement au rail latéral arrière (220, 220') et au rail latéral avant (210, 210').

2. Capote en Z-configuration selon la revendication 1, ledit bras d'équilibrage (260) étant relié à pivotement à la carrosserie (100) et au moins au bras d'entraînement (230, 230') du rail latéral avant et/ou au bras d'équilibrage (240, 240') du rail latéral avant.

3. Capote en Z-configuration selon la revendication 1 ou 2, ledit rail latéral avant (210, 210'), ledit rail latéral arrière (220, 220'), ledit bras d'entraînement (230, 230') du rail latéral avant, et ledit bras d'équilibrage (240, 240') du rail latéral avant constituant un ensemble à quatre articulations.

4. Capote en Z-configuration selon la revendication 3, comportant en outre un premier bras à ciseaux (420), ledit bras d'équilibrage (240) du rail latéral avant étant relié à pivotement audit rail latéral avant (210') et audit bras d'entraînement (230) du rail latéral avant.

5. Capote en Z-configuration selon la revendication 1, comportant en outre un bras d'entraînement (250, 250') de l'élément de sommet de toit, ledit bras étant relié à pivotement audit élément de sommet de toit (310, 310') et au moins au bras d'entraînement (230, 230') du rail latéral avant et/ou au bras d'équilibrage (240, 240') du rail latéral avant.

6. Capote en Z-configuration selon la revendication 5, ledit rail latéral avant (210, 210'), ledit élément de sommet de toit (310, 310'), ledit bras d'entraînement (250, 250') de l'élément de sommet de toit, et au moins le bras d'entraînement (230, 230') du rail latéral avant et/ou ledit bras d'équilibrage (240, 240') du rail latéral avant constituant un ensemble à quatre articulations.

7. Capote en Z-configuration selon la revendication 5, comportant en outre un deuxième bras à ciseaux (440), ledit bras d'entraînement (250') de l'élément de sommet de toit étant relié à pivotement audit élément de sommet de toit (310') et audit rail latéral avant (210').

8. Capote en Z-configuration selon la revendication 4, comportant en outre ledit premier bras à ciseaux (420) et un deuxième bras à ciseaux (440), le bras d'équilibrage (240') du rail latéral avant étant relié à pivotement audit rail latéral avant (210') et audit bras d'entraînement (230') du rail latéral avant par ledit premier bras à ciseaux (420), et ledit bras d'entraînement (250') de l'élément de sommet de toit étant relié à pivotement audit élément de sommet de toit (310') et audit rail latéral avant (210') par ledit deuxième bras à ciseaux (440), et le premier bras à ciseaux (420) présentant un premier membre (424) et un deuxième membre (428), ledit premier membre (424) étant relié à pivotement audit rail latéral avant (210') et au moins audit bras d'équilibrage (240') du rail latéral avant et/ou au deuxième membre (428), et ledit deuxième membre (428) étant relié à pivotement audit bras d'entraînement (230') du rail latéral avant et au moins audit bras d'équilibrage (240') du rail latéral avant et/ou audit premier membre (424).

9. Capote en Z-configuration selon la revendication 7, ledit deuxième bras à ciseaux (440) présentant un premier membre (444) et un deuxième membre (448), ledit premier membre (444) étant relié à pivotement audit élément de sommet de toit (310') et au moins audit bras d'entraînement (250') de l'élément de sommet de toit et/ou audit deuxième membre (448), et ledit deuxième membre (448) étant relié à pivotement audit rail latéral avant (210') et au moins audit bras d'entraînement (250') de l'élément de sommet de toit et/ou audit premier membre (444).

10. Capote en Z-configuration selon la revendication 1, comportant en outre:
ledit élément de sommet de toit (310') étant relié à pivotement audit rail latéral avant (210') par un premier bras à ciseaux (420), ledit rail latéral avant (210') étant relié à pivotement audit rail latéral arrière (220') par un deuxième bras à ciseaux (440) et ledit rail latéral arrière (220') étant relié à pivotement à la carrosserie du véhicule (100);
ledit premier bras à ciseaux (420) et ledit deuxième bras à ciseaux (440) apportant une qualité améliorée du déplacement de la capote en accordéon (20) par au moins une augmentation de la force de levée pendant la levée ou l'abaissement de la capote en accordéon (20) et/ou une réduction de l'accélération aux deux extrémités du déplacement de la capote en accordéon (20).

11. Capote en Z-configuration (10, 20) pour un véhicule automobile, selon la revendication 1, ladite capote présentant des rails latéraux (210, 210', 220, 220') avec un élément de sommet de toit indépendant (310, 310') et comportant:
un rail latéral avant (210, 210') avec un joint d'étanchéité latéral destiné à étanchéifier au moins une partie dudit rail latéral avant (210, 210') contre au moins une partie d'une fenêtre latérale dudit véhicule automobile (40);
un rail latéral arrière (220, 220') avec un joint d'étanchéité latéral destiné à étanchéifier au moins une partie dudit rail latéral arrière (220, 220') contre au moins une partie d'une fenêtre latérale dudit véhicule automobile (40);
un élément de sommet de toit (310, 310') sans joint d'étanchéité latéral, qui est relié à pivotement audit rail latéral avant (210, 210'), ledit latéral élément de sommet de toit (310, 310') sans joint d'étanchéité latéral présentant une position de rangement debout;
**caractérisé en ce que** la capote en accordéon (10, 20) ne présente que deux rails latéraux (210, 210', 220, 220').
